# EUROPÄISCHE PATENTSCHRIFT

(11) **EP 0 761 764 B1**
(45) Veröffentlichungstag und Bekanntmachung des Hinweises auf die Patenterteilung: **29.12.1999**
(21) Anmeldenummer: 96112208.2
(22) Anmeldetag: 29.07.1996
(51) Int. Cl.: C09B 29/36, C09B 29/036, C08K 5/3462, G03G 9/09, C09D 11/00

(54) **Wasserunlösliche Azofarbmittel auf Basis von Aminochinazolindionen**
Water-insoluble azo colouring agents derived from aminoquinazolinediones
Matières colorantes azoiques insolubles dans l'eau dérivées d'aminoquinazolinediones

(30) Priorität: 09.08.1995 DE 19529262
(43) Veröffentlichungstag der Anmeldung: 12.03.1997
(73) Patentinhaber: Clariant GmbH, 65929 Frankfurt am Main (DE)
(72) Erfinder: Weber, Joachim, Dr., 65929 Frankfurt (DE)

(56) Entgegenhaltungen:
- DE-A- 2 420 941
- DE-A- 2 535 140
- FR-A- 1 510 398
- FR-A- 2 247 511
- US-A- 4 171 301

## Beschreibung

Die Erfindung betrifft Azopigmente auf Basis von 6-Aminochinazolin-2,4-dionen und N-substituiertne Barbitursäuren.

Die DE-A-1 544 394 und DE-A-23 51 294 offenbaren Azopigmente auf Basis von 6-Aminochinazolindion und unsubstituierter Barbitursäure, die jedoch hinsichtlich der Temperaturstabilität, Farbstärke und Dispergierbarkeit in hochmolekularen organischen Materialien nicht mehr den heutigen Anforderungen genügen.

Azopigmente auf Basis von 4-Methyl-6-amino-chinolon-2 und unsubstituierter Barbitursäure sind in DE-A-2 420 941 offenbart. Entsprechende Azopigmente auf Basis von N-substituierten Barbitursäuren sind aus DE-A-2535140 bekannt.

Der vorliegenden Erfindung lag die Aufgabe zugrunde, neue Azopigmente mit gelbem Farbton, hoher Temperaturstabilität und hoher Farbstärke zur Verfügung zu stellen, die heutigen Anforderungen an Pigmente gerecht werden.

Es wurde gefunden, daß Azopigmente auf Basis von 6-Aminochinazolindionen und N-substituierten Barbitursäuren überraschenderweise die vorliegende Aufgabe lösen.

Gegenstand der vorliegenden Erfindung sind Azopigmente der allgemeinen Formel (I) 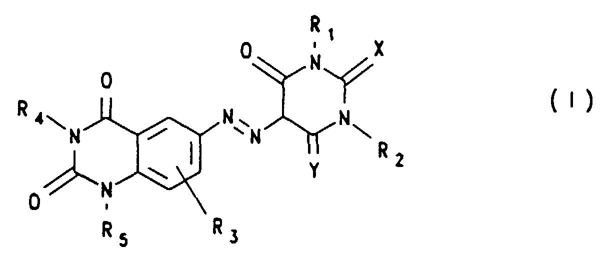 worin
- X: ein O- oder S-Atom oder eine Imino-Gruppe,
- Y: ein O-Atom oder eine Iminogruppe,
- R₁ und R₂: ein Wasserstoffatom, C₁-C₄-Alkyl, eine unsubstituierte Phenylgruppe oder eine substituierte Phenylgruppe mit 1 bis 5, vorzugsweise 1 bis 3, Substituenten aus der Gruppe C₁-C₄-Alkyl, C₁-C₄-Alkoxy, Halogen, Nitro, Cyano, Hydroxy, CF₃, CONH₂, CONH(C₅-C₆-cycloalkyl), CON(C₁-C₄-alkyl)₂, CONH(C₁-C₄)-alkyl, COO(C₁-C₄)alkyl, COO(C₅-C₆-cycloalkyl) und CONH(phenyl), mit der Maßgabe, daß mindestens einer der Reste R₁ oder R₂ eine der genannten von Wasserstoff verschiedenen Bedeutungen hat,
- R₃: ein Wasserstoffatom, eine Trifluormethylgruppe, ein Halogenatom, eine C₁-C₄-Alkyl-, eine C₁-C₄-Alkoxy-, eine Nitro- oder eine Cyanogruppe,
- R₄ und R₅: unabhängig voneinander ein Wasserstoffatom, C₁-C₄-Alkyl, Phenyl oder eine substituierte Phenyl-Gruppe mit 1 bis 5, vorzugsweise 1 bis 3, Substituenten aus der Gruppe C₁-C₄-Alkyl, C₁-C₄-Alkoxy, Halogen, Nitro, Cyano, Hydroxy, CF₃, CONH₂, CONH(C₅-C₆-cycloalkyl), CON(C₁-C₄-alkyl)₂, CONH(C₁-C₄)-alkyl, COO(C₁-C₄)alkyl, COO(C₅-C₆-cycloalkyl) und CONH(phenyl),
bedeuten.

Von besonderem Interesse sind Verbindungen der allgemeinen Formel (I), worin
- X: ein O- oder ein S-Atom,
- Y: ein O-Atom,
- R₁: ein Wasserstoffatom oder eine C₁-C₄-Alkylgruppe, vorzugsweise Methyl oder Ethyl, oder eine Phenylgruppe,
- R₂: ein C₁-C₄-Alkyl, wie Methyl oder Ethyl, oder eine Phenylgruppe,
- R₃: ein Wasserstoffatom, eine Trifluormethyl-Gruppe oder ein Chlor-Atom, und
- R₄ und R₅: unabhängig voneinander ein Wasserstoffatom, Phenyl oder C₁-C₄-Alkyl, wie Methyl oder Ethyl,
bedeuten.

Die allgemeine Formel (I) ist als idealisierte Formel zu verstehen und umfaßt auch die entsprechenden tautomeren Verbindungen sowie die möglichen Konfigurationsisomeren jeder tautomeren Form. Die Verbindungen der allgemeinen Formel (I) liegen normalerweise in der Hydrazonform vor. Die allgemeine Formel (I) umfaßt deshalb vor allem auch die Hydrazonform.

Gegenstand der vorliegenden Erfindung ist auch ein Verfahren zur Herstellung der erfindungsgemäßen Verbindungen der allgemeinen Formel (I), dadurch gekennzeichnet, daß man ein oder mehrere Amine der allgemeinen Formel (II) 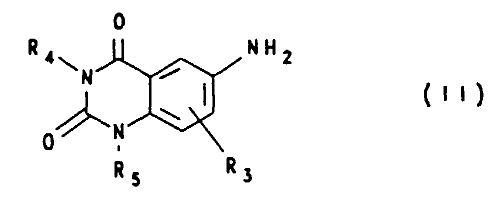 worin R₃, R₄, R₅ die in Formel (I) definierten Bedeutungen haben, diazotiert und im molaren Verhältnis von 1:0,9 bis 1,1, bevorzugt 1:0,95 bis 1,05, mit einer oder mehreren Verbindungen der Formel (III), 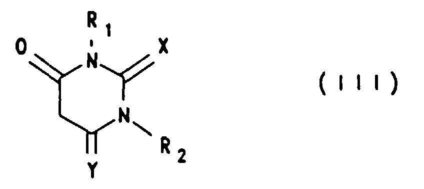 worin X, Y, R₁ und R₂ die in Formel (I) definierten Bedeutungen haben, unter geeigneten Bedingungen kuppelt.

Die allgemeinen Formeln (II) und (III) sind als idealisierte Formeln zu verstehen, die auch die entsprechenden tautomeren Verbindungen sowie die möglichen Konfigurationsisomere jeder tautomeren Form umfassen.

Geeignete Amine der Formel (II) sind beispielsweise 6-Amino-1H,3H-chinazolin-2,4-dion sowie substituierte 6-Amino-1H,3H-chinazolin-2,4-dione, die an der 5-, 7- oder 8-Position des Chinazolin-Systems, insbesondere an der 7-Position, einen Substituenten aus der Gruppe Halogen, insbesondere Chlor; Trifluormethyl; C₁-C₄-Alkyl, insbesondere Methyl oder Ethyl; C₁-C₄-Alkoxy, insbesondere Methoxy; Nitro oder Cyano aufweisen. Geeignet sind weiterhin 6-Amino-chinazolin-2,4-dione, die unabhängig von einer Substitution an der 5-, 7- oder 8-Position an der 1-Position und/oder an der 3-Position C₁-C₄-Alkyl, vorzugsweise Methyl oder Ethyl, Phenyl, Chlorphenyl, Methylphenyl oder Methoxyphenyl tragen.

Die Herstellung derartiger Verbindungen ist in der Literatur beschrieben, beispielsweise in Beilstein 5-24-07-00456 ff, 5-24-07-00523 ff, 4-25-00-04191 ff und in den dort zitierten Verweisen auf frühere Ergänzungwerke. Vorzugsweise verwendet man 6-Amino-1H,3H-chinazolin-2,4-dion, 7-Trifluormethyl-6-amino-1H,3H-chinazolin-2,4-dion, 6-amino-3H-chinazolin-2,4-dion 1-Methyl-6-amino-3H-chinazolin-2,4-dion, 1-Phenyl-6-amino-3H-chinazolin-2,4-dion und 1,3-Dimethyl-6-amino-chinazolin-2,4-dion.

Geeignete Kupplungskomponenten der Formel (III) sind beispielsweise 1-Methylbarbitursäure, 1,3-Dimethylbarbitursäure, 1-Phenylbarbitursäure und 1,3-Diethyl-2-thiobarbitursäure. Die Herstellung derartiger Verbindungen ist in der Literatur beschrieben, beispielsweise in Beilstein 5-24-09-00094 ff und in den dort zitierten Verweisen auf frühere Ergänzungswerke.

Die Herstellung der erfindungsgemäßen Verbindungen der Formel (I) erfolgt nach an sich bekannten Verfahren durch Kupplung der diazotierten Amine mit den genannten Kupplungskomponenten im wässrigen Medium, gegebenenfalls in Gegenwart nichtionogener, anionischer oder kationischer oberflächenaktiver Substanzen, die einen Trübungspunkt in wässrigem Medium haben können. Gegebenenfalls können auch weitere Hilfsmittel, wie natürliche oder synthetische Harze oder Harzderivate, oder übliche Lackfarben-, Druckfarben- oder Kunststoff-Additive verwendet werden. Die Kupplung kann auch ganz oder teilweise in organischen Lösungsmitteln erfolgen.

Die Kupplungsreaktion wird nach einer der üblichen Methoden im wäßrigen Medium durchgeführt, indem man
a) eine Lösung des Diazoniumsalzes zu einer Suspension oder Dispersion der Kupplungskomponente zugibt, oder
b) eine Lösung des Diazoniumsalzes und eine Lösung, Suspension oder Dispersion der Kupplungskomponente zu einer Pufferlösung oder in eine Mischdüse gleichzeitig zudosiert, oder
c) eine Lösung der Kupplungskomponente zu einer Lösung des Diazoniumsalzes zugibt, oder
d) eine Suspension oder Dispersion der Kupplungskomponente zu einer Lösung des Diazoniumsalzes zugibt.

Die Verfahrensparameter Zeit, Temperatur und pH-Wert unterscheiden sich nur wenig von denen in herkömmlichen Kupplungsverfahren und sind somit dem Fachmann bekannt.

Im erfindungsgemäßen Verfahren besonders vorteilhaft ist die Methode c.

Die erfindungsgemäßen Verbindungen der Formel (I) stellen wertvolle wasserunlösliche Farbmittel dar und können nach der Kupplungsreaktion in üblicher Weise isoliert werden. Häufig ist es zweckmäßig, die nach der Kupplungsreaktion erhaltenen Azopigmente zur Erzielung der vollen Farbstärke und einer besonders günstigen Kristallstruktur einer Nachbehandlung (Finish) zu unterwerfen. Beispielsweise kann man zu diesem Zweck die feuchten oder getrockneten Pigmente in organischen Lösungsmitteln, wie beispielsweise Pyridin, N-Methyl-2-pyrrolidon, Dimethylformamid, Dimethylsulfoxid, Alkoholen, Chlorbenzolen, Eisessig, Chinolin, Glykolen, Nitrobenzolen oder aromatischen Kohlenwasserstoffen einige Zeit, gegebenenfalls unter erhöhtem Druck, erhitzen. In einigen Fällen gelingt die Überführung in eine günstige Kristallstruktur oder die Erzielung der vollen Farbstärke auch schon durch Erhitzen mit Wasser, gegebenenfalls unter Druck und gegebenenfalls unter Zusatz von Dispergiermitteln oder organischen Lösungsmitteln, beispielsweise der vorstehenden Art.

Die erfindungsgemäßen Verbindungen der Formel (I) eignen sich besonders zum Pigmentieren von hochmolekularen organischen Materialien. Hochmolekulare organische Materialien sind beispielsweise Celluloseether und -ester, wie Ethylcellulose, Nitrocellulose, Celluloseacetat, Cellulosebutyrat, natürliche Harze oder Kunstharze, wie Polymerisationsharze oder Kondensationsharze, z.B. Aminoplaste, insbesondere Harnstoff- und Melamin-Formaldehydharze, Alkydharze, Acrylharze, Phenoplaste, Polycarbonate, Polystyrol, Polyvinylverbindungen, insbesondere Polyvinylchlorid oder Polyvinylacetat, Polyolefine, insbesondere Polyethylen und Polypropylen, Polyacrylverbindungen, insbesondere Polyacrylnitril und Polyacrylsäureester, Polyamide, Polyurethane oder Polyester, Gummi, Casein, Silikon und Silikonharze, einzeln oder in Mischungen. Als Medium besonders bevorzugt sind Polyolefine, wie Polyethylen und Polypropylen.

Es spielt dabei keine Rolle, ob die erwähnten hochmolekularen organischen Verbindungen als plastische Massen, Schmelzen oder in Form von Spinnlösungen vorliegen oder in Lacken, Anstrichstoffen oder Druckfarben enthalten sind. Je nach Verwendungszweck erweist es sich als vorteilhaft, die erfindungsgemäß erhaltenen Pigmentzubereitungen als Verschnitte oder in Form von Präparationen oder Dispersionen zu benutzen. Bezogen auf das zu pigmentierende hochmolekulare organische Material, setzt man die erfindungsgemäßen Pigmente in einer Menge von vorzugsweise 0,1 bis 10 Gew.-% ein.

Die erfindungsgemäßen Verbindungen der Formel (I) zeichnen sich durch besonders hohe Temperaturstabilität, gute Dispergierbarkeit in den hochmolekularen organischen Materialien und hohe Farbstärke aus.

Die erfindungsgemäß hergestellten wasserunlöslichen Verbindungen der Formel (I) sind geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Polymerisationstoner sowie Spezialtoner (Lit: L.B. Schein, "Electrophotography and Development Physics"; Springer Series in Electrophysics 14, Springer Verlag, 2nd edition, 1992).

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Desweiteren sind die erfindungsgemäß hergestellten wasserunlöslichen Verbindungen der Formel (I) geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen (J.F. Hughes, "Electrostatics Powder Coating" Research Studies, John Wiley & Sons, 1984).

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäß hergestellten wasserunlöslichen Verbindungen der Formel (I) als Farbmittel in Ink-Jet Tinten auf wäßriger und nichtwäßriger Basis sowie in solchen Tinten, die nach dem hot-melt-Verfahren arbeiten, geeignet.

Zur Beurteilung der Eigenschaften der nach der Erfindung hergestellten Pigmente auf dem Lacksektor wurde aus der Vielzahl der bekannten Lacke ein aromatenhaltiger Alkydmelaminharzlack (AM) auf Basis eines mittelöligen, nichtrocknenden Alkydharzes ausgewählt.

Zur Beurteilung der Eigenschaften der nach der Erfindung hergestellten Pigmente auf dem Kunststoffsektor wurden aus der Vielzahl der bekannten Kunststoffe Weichpolyvinylchlorid und Polyethylen ausgewählt.

Zur Beurteilung der Eigenschaften der nach der Erfindung hergestellten Pigmente auf dem Drucksektor wurde aus der Vielzahl der bekannten Drucksysteme ein Offsetdrucksystem auf Alkydharzbasis ausgewählt.

Zur Beurteilung der Eigenschaften der nach der Erfindung hergestellten Pigmente auf dem Tonersektor wurde aus der Vielzahl der bekannten Tonersysteme ein Tonersystem auf Polyesterharzbasis ausgewählt.

Zur Beurteilung der Eigenschaften der nach der Erfindung hergestellten Pigmente auf dem Pulverlacksektor wurde aus der Vielzahl der bekannten Pulverlacksysteme ein Harzsystem ausgewählt.

In den folgenden Beispielen bedeuten Teile Gewichtsteile und Prozente Gewichtsprozente.

### Herstellungsbeispiele

### Beispiel 1:

### a) Diazoniumsalzlösung

35,4 Teile 6-Amino-1H,3H-chinazolin-2,4-dion werden in 400 Volumenteilen Eisessig zum Sieden erhitzt und 60 Volumenteile 31 %ige Salzsäure zugetropft. Nach Abkühlen auf 20°C werden 40 Volumenteile 5-normaler Natriumnitritlösung innerhalb 5 Minuten zugetropft. Es wird 1 Stunde bei Raumtemperatur nachgerührt und anschließend mit 660 Volumenteilen Wasser verdünnt. Das Diazoniumsalz löst sich, die Lösung klärt man durch Filtration und zerstört den Nitritüberschuß durch Amidosulfonsäure.

### b) Lösung der Kupplungskomponente

40,8 Teile N-Phenylbarbitursäure werden in 600 Volumenteilen Wasser durch Zugabe von 24 Volumenteilen 33 %iger Natronlauge gelöst.

### c) Kupplung

In einem Kuppelgefäß werden die Diazoniumsalzlösung, 200 Teile Eis und 78,2 Teile einer 10 %igen wäßrigen Lösung eines Fettalkoholpolyglykolethers auf Basis eines C₁₆-C₁₈-Alkohols, umgesetzt mit ca. 25 Teilen Ethylenoxid, vorgelegt. Mit 900 Volumenteilen 4 normaler Natriumacetatlösung wird der pH-Wert auf 4,3 bis 4,4 eingestellt. Diese Mischung wird innerhalb 50 bis 60 Minuten mit der Lösung der Kupplungskomponente versetzt. Nach beendeter Kupplung erhitzt man die Pigmentsuspension durch Einleiten von Dampf auf 98°C und hält diese Temperatur 90 Minuten. Man läßt auf 80°C abkühlen, filtriert das Pigment ab und wäscht es mit Wasser.

### d) Nachbehandlung

Der feuchte Presskuchen wird in 1500 Volumenteilen Eisessig unter Rühren zum Kochen erhitzt und 10 Minuten bei dieser Temperatur gehalten. Nach Abkühlen auf 100°C wird das Pigment abgesaugt, mit Eisessig und dann mit Aceton gewaschen und bei 65°C getrocknet. Nach dem Mahlen erhält man 63,6 Teile eines gelben Pigments.
- IR-Spektrum:: 3440 cm⁻¹, 3178 cm⁻¹, 3065⁻¹, 2843 cm⁻¹, 1711 cm⁻¹, 1642 cm⁻¹, 1521 cm⁻¹, 1420 cm⁻¹, 1278 cm⁻¹, 1212 cm⁻¹, 720 cm⁻¹.

Verfährt man in Analogie zu dem Herstellungsbeispiel und setzt anstelle von 6-Amino-1H,3H-chinazolin-2,4-dion als Base bzw. N-Phenylbarbitursäure als Kupplungskomponente andere Basen und Kupplungskomponenten entsprechend nachfolgender Tabelle 1 ein, so gelangt man ebenfalls zu wertvollen Pigmenten:

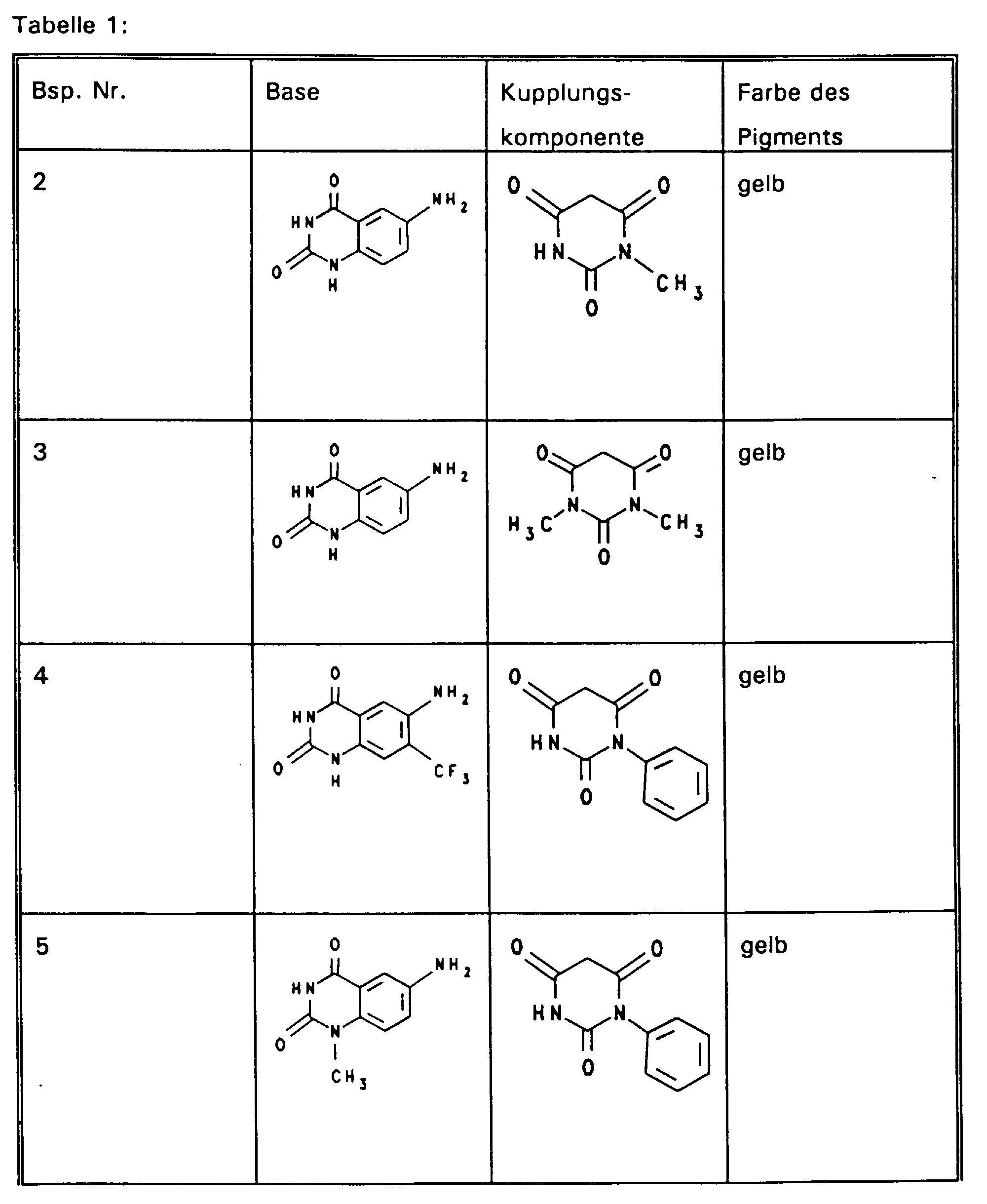

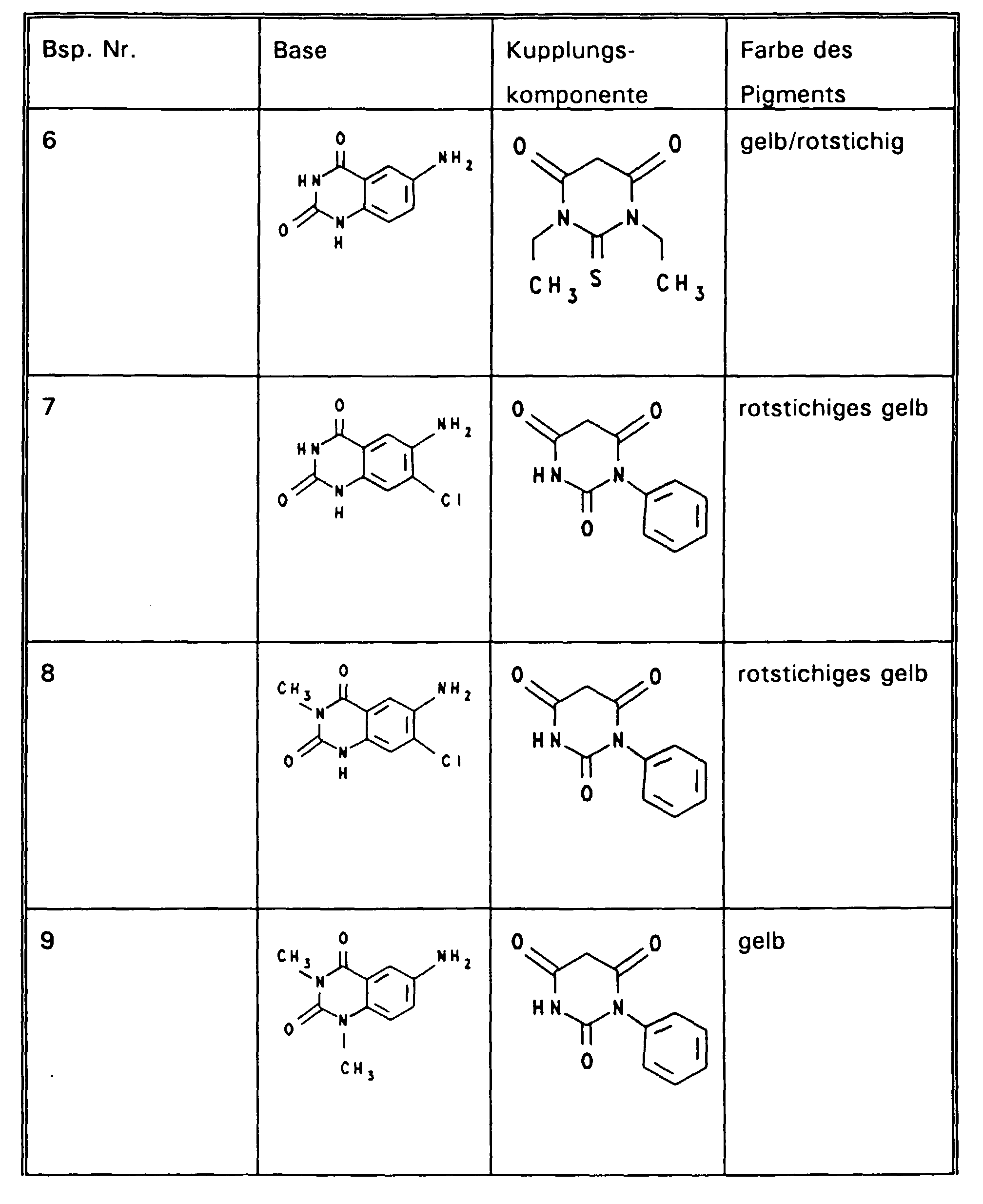

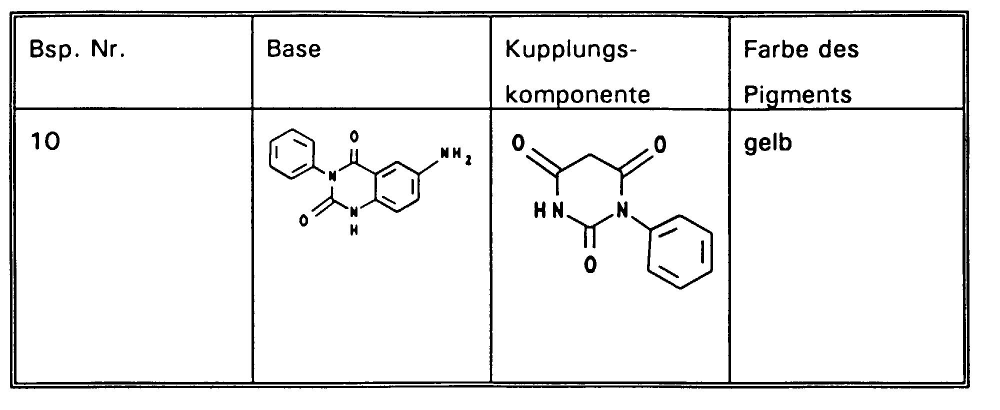

### Anwendungsbeispiele:

Das Pigment aus dem Beispiel 1 liefert im AM-Lack eine deckende und farbstarke Lackierung, die eine hohe Lichtechtheit aufweist. Im Offsetdruck werden glänzende und farbstarke Drucke erhalten. In Weichpolyvinylchlorid werden gute Dispergierbarkeiten, hohe Farbstärken und reine Farbtöne erhalten. Die Prüfung in Polyethylen zeigt hohe Temperaturstabilitäten und hohe Farbstärken. Die Prüfung im Tonersystem zeigt Kompatibilität und homogene Dispergierbarkeit im Bindemittel, hohe Farbstärke und günstige Transparenz. Vorteilhaft ist insbesondere der konstante elektrostatische Einfluß auf das Tonersystem bei triboelektrischer Aufladung. Die Prüfung im Pulverlacksystem belegt die Versprühbarkeit des Lackes und dessen Abscheidung auf dem Werkstück.

Die Pigmente aus den Beispielen 2 bis 6 liefern im AM-Lack farbstarke Lackierungen mit reinen Farbtönen.

## Patentansprüche

1. Verbindung der allgemeinen Formel (I) 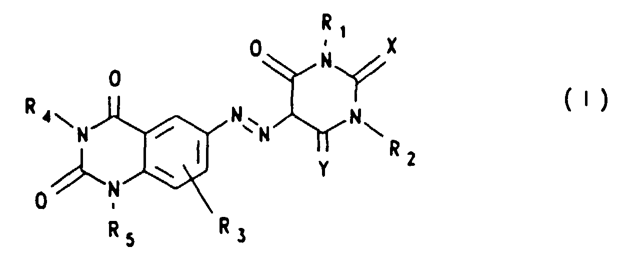 worin
X ein O- oder S-Atom oder eine Imino-Gruppe,
Y ein O-Atom oder eine Iminogruppe,
R₁ und R₂ ein Wasserstoffatom, C₁-C₄-Alkyl, eine unsubstituierte Phenylgruppe oder eine substituierte Phenylgruppe mit 1 bis 5 Substituenten aus der Gruppe C₁-C₄-Alkyl, C₁-C₄-Alkoxy, Halogen, Nitro, Cyano, Hydroxy, CF₃, CONH₂, CONH(C₅-C₆-cycloalkyl),CON(C₁-C₄-alkyl)₂, CONH(C₁-C₄)-alkyl, COO(C₁-C₄)alkyl, COO(C₅-C₆-cycloalkyl) und CONH(phenyl), mit der Maßgabe, daß mindestens einer der Reste R₁ oder R₂ eine der genannten von Wasserstoff verschiedenen Bedeutungen hat,
R₃ ein Wasserstoffatom, eine Trifluormethylgruppe, ein Halogenatom, eine C₁-C₄-Alkyl-, eine C₁-C₄-Alkoxy-, eine Nitro- oder eine Cyanogruppe,
R₄ und R₅ unabhängig voneinander ein Wasserstoffatom, C₁-C₄-Alkyl, Phenyl oder eine substituierte Phenyl-Gruppe mit 1 bis 5 Substituenten aus der Gruppe C₁-C₄-Alkyl, C₁-C₄-Alkoxy, Halogen, Nitro, Cyano, Hydroxy, CF₃, CONH₂, CONH(C₅-C₆-cycloalkyl), CON(C₁-C₄-alkyl)₂, CONH(C₁-C₄)-alkyl, COO(C₁-C₄)alkyl, COO(C₅-C₆-cycloalkyl) und CONH(phenyl),
bedeuten.

2. Verbindung nach Anspruch 1, dadurch gekennzeichnet, daß
X ein O- oder S-Atom,
Y ein O-Atom,
R₁ ein Wasserstoffatom, eine C₁-C₄-Alkylgruppe oder eine Phenylgruppe,
R₂ eine C₁-C₄-Alkylgruppe oder eine Phenylgruppe,
R₃ ein Wasserstoffatom, ein Chloratom oder eine CF₃-Gruppe,
R₄ ein Wasserstoffatom, Phenyl oder C₁-C₄-Alkyl und
R₅ ein Wasserstoffatom, Phenyl oder C₁-C₄-Alkyl sind.

3. Verbindung nach Anspruch 1 oder 2, dadurch gekennzeichnet, daß die C₁-C₄-Alkylgruppen jeweils Methyl oder Ethyl sind.

4. Verbindung nach mindestens einem der Ansprüche 1 bis 3, dadurch gekennzeichnet, daß der Rest R₃ an 7-Position des Chinazolin-Systems steht.

5. Verbindung nach mindestens einem der Ansprüche 1 bis 4, dadurch gekennzeichnet, daß
R₁ Phenyl,
R₂, R₃, R₄ und R₅ jeweils Wasserstoff und
X und Y jeweils ein O-Atom sind.

6. Verfahren zur Herstellung einer Verbindung nach mindestens einem der Ansprüche 1 bis 5, dadurch gekennzeichnet, daß man ein oder mehrere Amine der allgemeinen Formel (II), 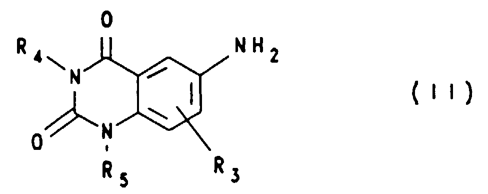 worin R₃, R₄, R₅ die in Formel (I) definierten Bedeutungen haben, diazotiert und im molaren Verhältnis von 1:0,9 bis 1,1, bevorzugt 1:0,95 bis 1,05, mit einer oder mehreren Verbindungen der Formel (III), 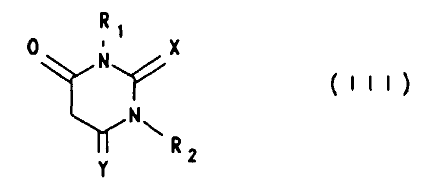 worin X, Y, R₁ und R₂ die in Formel (I) definierten Bedeutungen haben, unter geeigneten Bedingungen kuppelt.

7. Verwendung einer Verbindung der allgemeinen Formel (I) gemäß einem oder mehreren der Ansprüche 1 bis 5 zum Pigmentieren von hochmolekularen organischen Materialien, Lacken, Anstrichstoffen, Druckfarben, elektrophotographischen Tonern und Entwicklern, triboelektrisch oder elektrokinetisch versprühbaren Pulvern und Pulverlacken, und Tinten.

8. Verwendung nach Anspruch 7, dadurch gekennzeichnet, daß das hochmolekulare organische Medium ein Polyolefin ist.

9. Verwendung nach Anspruch 8, dadurch gekennzeichnet, daß das Polyolefin Polyethylen oder Polypropylen ist.

## Claims

1. A compound of the formula (I) 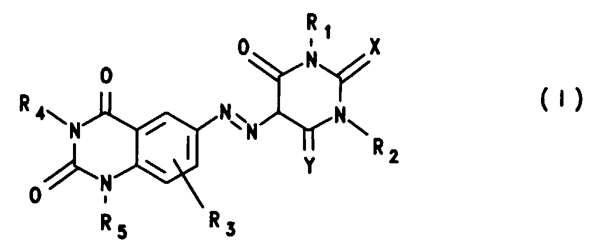 in which
X is an O or S atom or an imino group,
Y is an O atom or an imino group,
R₁ and R₂ are a hydrogen atom, C₁-C₄-alkyl, an unsubstituted phenyl group or a substituted phenyl group having 1 to 5 substituents from the group consisting of C₁-C₄-alkyl, C₁-C₄-alkoxy, halogen, nitro, cyano, hydroxyl, CF₃, CONH₂, CONH(C₅-C₆-cycloalkyl), CON(Ci-C4-alkyl)2, CONH(C₁-C₄)-alkyl, COO(C₁-C₄)-alkyl, COO(C₅-C₆-cycloalkyl) and CONH(phenyl), with the proviso that at least one of the radicals R₁ or R₂ has one of the meanings mentioned which differ from hydrogen,
R₃ is a hydrogen atom, a trifluoromethyl group, a halogen atom or a C₁-C₄-alkyl, a C₁-C₄-alkoxy, a nitro or a cyano group and
R₄ and R₅ independently of one another are a hydrogen atom, C₁-C₄-alkyl, phenyl or a substituted phenyl group having 1 to 5 substituents from the group consisting of C₁-C₄-alkyl, C₁-C₄-alkoxy, halogen, nitro, cyano, nydroxyl, CF₃, CONH₂, CONH(C₅-C₆-cycloalkyl), CON(C₁-C₄-alkyl)₂, CONH(C₁-C₄)-alkyl, COO(C₁-C₄)-alkyl, COO(C₅-C₆-cycloalkyl) and CONH(phenyl).

2. A compound as claimed in claim 1, in which
X is an O or S atom,
Y is an O atom,
R₁ is a hydrogen atom, a C₁-C₄-alkyl group or a phenyl group,
R₂ is a C₁-C₄-alkyl group or a phenyl group,
R₃ is a hydrogen atom, a chlorine atom or a CF₃ group,
R₄ is a hydrogen atom, phenyl or C₁-C₄-alkyl and
R₅ is a hydrogen atom, phenyl or C₁-C₄-alkyl.

3. A compound as claimed in claim 1 or 2, in which the C₁-C₄-alkyl groups are each methyl or ethyl.

4. A compound as claimed in at least one of claims 1 to 3, in which the radical R₃ is on the 7-position of the quinazoline system.

5. A compound as claimed in at least one of claims 1 to 4, in which
R₁ is phenyl,
R₂, R₃, R₄ and R₅ are each hydrogen and
X and Y are each an O atom.

6. A process for the preparation of a compound as claimed in at least one of claims 1 to 5, which comprises diazotizing one or more amines of the formula (II) 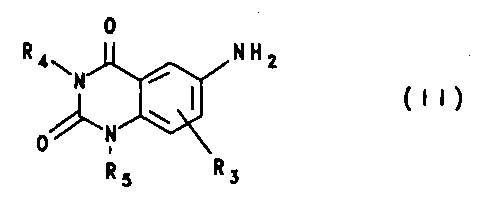 in which R₃, R₄ and R₅ have the meanings defined in formula (I), and coupling the diazotization products, in a molar ratio of 1:0.9 to 1.1, preferably 1:0.95 to 1.05, with one or more compounds of the formula (III) 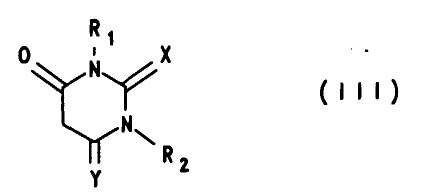 in which X, Y, R₁ and R₂ have the meanings defined in formula (I), under suitable conditions.

7. The use of a compound of the formula (I) as claimed in one or more of claims 1 to 5 for pigmenting high molecular weight organic materials, lacquers, paints, printing inks, electrophotographic toners and developers, powders and powder coatings which can be sprayed triboelectrically or electrokinetically, and inks.

8. The use as claimed in claim 7, wherein the high molecular weight organic medium is a polyolefin.

9. The use as claimed in claim 8, wherein the polyolefin is polyethylene or polypropylene.

## Revendications

1. Composé de formule générale (I) 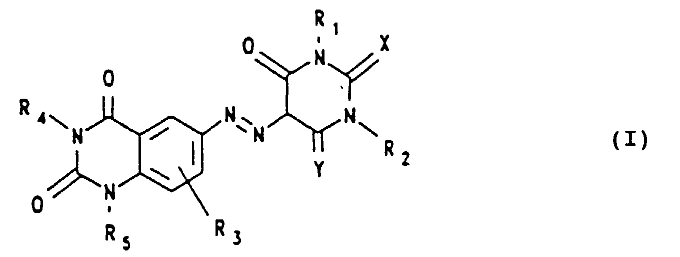 dans laquelle
X représente un atome de O ou de S ou un groupe imino,
Y représente un atome de O ou un groupe imino,
R₁ et R₂ représentent un atome d'hydrogène, un groupe alkyle en C₁-C₄, un groupe phényle non substitué ou un groupe phényle substitué présentant 1 à 5 substituants pris parmi les groupes alkyle en C₁-C₄, alkoxy en C₁-C₄, halogène, nitro, cyano, hydroxy, CF₃, CONH₂, CONH(cycloalkyle en C₅-C₆), CON(alkyle en C₁-C₄)₂, CONH(alkyle en C₁-C₄), COO(alkyle en C1-C₄), COO(cycloalkyle en C₅-C₆) et CONH(phényle), à la condition qu'au moins l'un des restes R₁ ou R₂ possède l'une des significations précitées différentes de l'atome d'hydrogène,
R₃ représente un atome d'hydrogène, un groupe trifluorométhyle, un atome d'halogène, un groupe alkyle en C₁-C₄, un groupe alkoxy en C₁-C₄, un groupe nitro ou un groupe cyano,
R₄ et R₅ représentent, indépendamment l'un de l'autre, un atome d'hydrogène, des groupes alkyle en C₁-C₄, phényle ou phényle substitué par 1 à 5 substituants pris parmi les groupes alkyle en C₁-C₄, alkoxy en C₁-C₄, halogène, nitro, cyano, hydroxy, CF₃, CONH₂, CONH(cycloalkyle en C₅-C₆), CON(alkyle en C₁-C₄)₂, CONH(alkyle en C₁-C₄), COO(alkyle en C₁-C₄), COO(cycloalkyle en C₅-C₆) et CONH(phényle).

2. Composé selon la revendication 1, caractérisé en ce que
X représente un atome de O ou de S,
Y représente un atome de O,
R₁ représente un atome d'hydrogène, un groupe alkyle en C₁-C₄ ou un groupe phényle,
R₂ représente un groupe alkyle en C₁-C₄ ou un groupe phényle,
R₃ représente un atome d'hydrogène, un atome de chlore ou un groupe CF₃,
R₄ représente un atome d'hydrogène, des groupes phényle ou alkyle en C₁-C₄,
R₅ représente un atome d'hydrogène, des groupes phényle ou alkyle en C₁-C₄.

3. Composé selon la revendication 1 ou 2, caractérisé en ce que les groupes alkyle en C₁-C₄ représentent à chaque fois méthyle ou éthyle.

4. Composé selon au moins l'une des revendications 1 à 3, caractérisé en ce que le reste R₃ se trouve en position 7 du système quinazoline.

5. Composé selon l'une des revendications 1 à 4, caractérisé en ce que
R₁ représente un groupe phényle,
R₂, R₃, R₄ et R₅ représentent chacun un atome d'hydrogène, et
X et Y représentent chacun un atome de O.

6. Procédé de préparation d'un composé selon au moins l'une des revendications 1 à 5, caractérisé en ce que l'on diazote une ou plusieurs amines de formule générale (II) 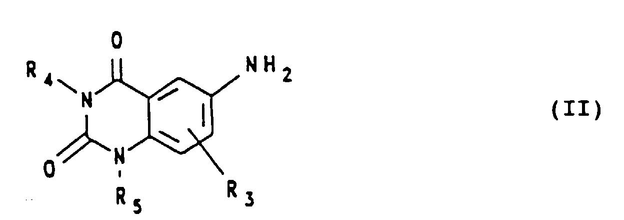 dans laquelle R₃, R₄, R₅ possèdent les définitions données à la formule (I), et l'on copule, sous conditions appropriées, dans un rapport molaire de 1:0,9 à 1,1, de préférence de 1:0,95 à 1,05, avec un ou plusieurs composés de formule (III) 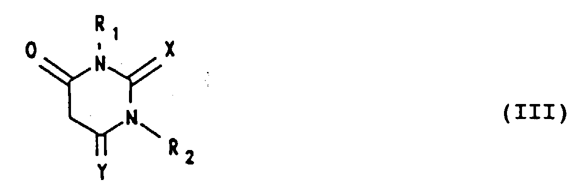 dans laquelle X, Y, R₁ et R₂ possèdent les définitions données à la formule (I).

7. Utilisation d'un composé de formule générale (I) selon une ou plusieurs des revendications 1 à 5 pour la pigmentation de matières organiques de haut poids moléculaire, de vernis, d'enduits, d'encres d'imprimerie, de toners et de révélateurs électrophotographiques, de poudres et de vernis en poudres pulvérisables par triboélectricité ou par électrocinétique, et d'encres.

8. Utilisation selon la revendication 7, caractérisée en ce que le milieu organique de haut poids moléculaire est une polyoléfine.

9. Utilisation selon la revendication 8, caractérisée en ce que la polyoléfine est le polyéthylène ou le polypropylène.
